Europäisches Patentamt

European Patent Office

Office européen des brevets

(19)

(11) Publication number: **0 272 826 B1**

# EUROPEAN PATENT SPECIFICATION

(12)

(45) Date of publication of patent specification: 06.03.91   (51) Int. Cl.⁵: **F25B  41/04**, G05D 23/12,
G05D 16/06

(21) Application number: 87310697.5

(22) Date of filing: 04.12.87

(54) Control device for a refrigeration circuit.

(30) Priority: 06.12.86 JP 187389/86

(43) Date of publication of application:
29.06.88 Bulletin 88/26

(45) Publication of the grant of the patent:
06.03.91 Bulletin 91/10

(84) Designated Contracting States:
DE FR GB IT SE

(56) References cited:
GB-A- 563 981         US-A- 1 761 573
US-A- 1 826 307       US-A- 2 753 692
US-A- 3 525 234       US-A- 3 640 086
US-A- 3 886 761

(73) Proprietor: SANDEN CORPORATION
20 Kotobuki-cho
Isesaki-shi Gunma, 372(JP)

(72) Inventor: Sato, Motoharu
3-11-38 Ojimaminami
Honjo-shi Saitama 367(JP)

(74) Representative: Jackson, Peter Arthur et al
Gill Jennings & Every, 53-64 Chancery Lane
London WC2A 1HN(GB)

## Description

CONTROL DEVICE FOR A REFRIGERATION CIRCUIT

This invention relates to a control device for controlling the flow volume of refrigerant in a refrigeration circuit.

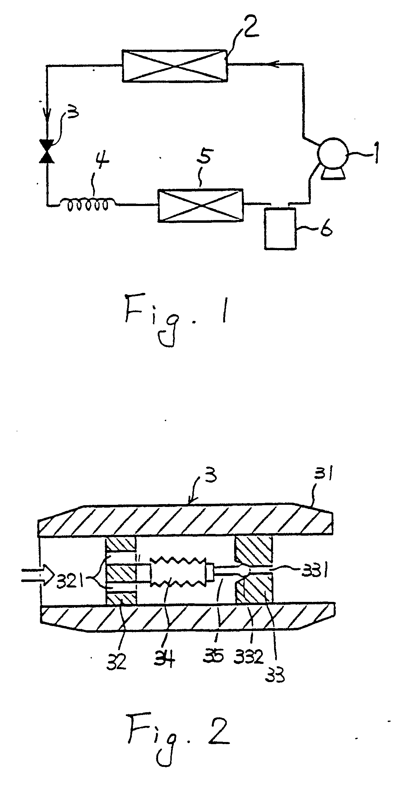

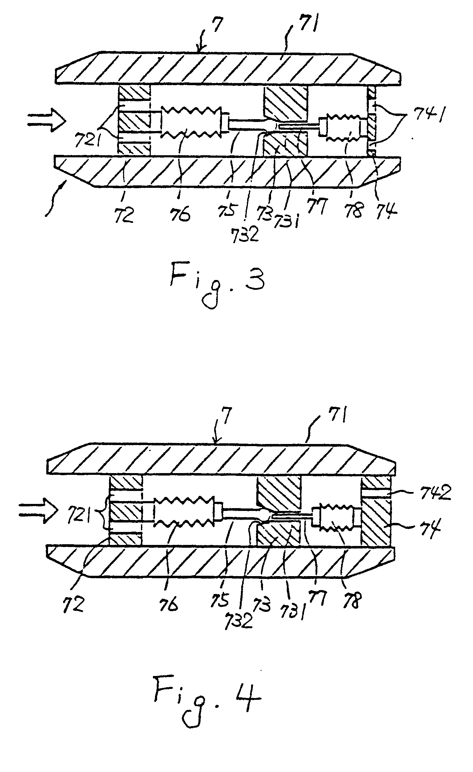

Referring to Fig. 1, there is shown a conventional refrigeration circuit (e.g. as disclosed in JP-A-55-82270) for use in an automotive air conditioning system and it comprises a compressor 1, a condenser 2, a control device 3, a capillary 4, an evaporator 5 and an accumulator 6 connected together in series. With reference to Fig. 2, the control device 3 comprises a tubular casing 31, a first dividing wall 32, a second dividing wall 33, a bellows 34, and a valve element 35. The first dividing wall 32 and the second dividing wall 33 are rigidly attached to the inner surface of the tubular casing 3I at spaced apart positions. The first dividing wall 32 has a plurality of holes 321, and the second dividing wall 33 has a throat 331 and an opening 332. The bellows 34 are disposed between the two dividing walls 32, 33 with one end portion fixed to the first dividing wall 32. The valve element 35 is fixed on the other end portion of the bellows 34. The bellows 34 are charged with the same refrigerant as in the refrigeration circuit or with fluid which has a characteristic of having a higher saturated vapour pressure than the refrigerant in the refrigerant circuit and is maintained so as to be saturated. The operation of the control device 3 depends upon the degree of sub-cooling of the refrigerant at the outlet side of the condenser 2, and, more specifically, the control device 3 operates to maintain the balance of pressure between the refrigerant in the tubular casing 31 and the fluid in the bellows 34 in response to the temperature of the refrigerant in the tubular casing 31 and the recoil strength of the bellows 34.

If compressor 1 is not being driven, the refrigerant in the refrigeration circuit is stationary, and the pressure of the refrigerant at the outlet side of the condenser 2 is thus always less than the pressure of the fluid in the bellows 34 and the recoil strength of the bellows 34. As a result, the bellows 34 extend towards the right and the valve element 35 closes the opening 332 of the throat 331.

The opening 332 of the throat 331 remains closed until fluid refrigerant fills the conduit between the control device 3 and the condenser 2 after the compressor 1 has been started.

Then, when the conduit between the condenser 2 and the control device 3 is filled with the fluid refrigerant and the pressure of the refrigerant at the outlet side of the condenser 2 is higher than the pressure of the fluid in the bellows 34 and the recoil strength of the bellows 34, the bellows 34 start to contract, and the valve element 35 moves towards the left. Thus, the size of the unobstructed area of the opening 332 varies in accordance with the degree of sub-cooling of the refrigerant. Since the size of the unobstructed area of the opening 332 increases as the degree of sub-cooling of the refrigerant becomes larger, the degree of sub-cooling of the refrigerant is controlled to be constant by the operation of the bellows 34. The desired degree of sub-cooling of the refrigerant can be predetermined through selection of the refrigerant or changing of the recoil strength of the bellows 34.

However, if there is insufficient refrigerant in the refrigeration circuit, the refrigerant will become a mixture of fluid and gas, and the temperature of the refrigerant will become the saturation temperature. Therefore, the bellows 34 extend towards the right, and the valve element 35 closes the opening 332 of the throat 331. The flow of refrigerant is thus reduced immediately, and the pressure of the refrigerant at the outlet side of the compressor I is thereby abnormally decreased. As a result, the degree of superheat of the refrigerant at the inlet side of the compressor I rapidly increases, thereby making it likely that the compressor I will seize up.

It is a primary object of this invention to provide a control device for a refrigeration circuit which can prevent abnormal reduction of the pressure at the low pressure side of the refrigeration circuit.

GB-A-56398I discloses a control device for a refrigeration circuit, the device comprising a tubular casing having a passageway therethrough from upstream to downstream ends of the casing, a first dividing wall across the passageway and having a plurality of holes therethrough, a second dividing wall and having a throat therethrough, and resilient means located between the first and second dividing walls and having a first valve element at one end for controlling refrigerant flow through the throat, a third dividing wall across the passageway downstream of the second wall and having at least one hole therethrough, and a bellows which is located between the second and third dividing walls and the operation of which is dependent on the fluid pressure downstream of the throat, the bellows having a second valve element at one end, the second valve element extending along the throat and being arranged to hold the first valve element away from the throat upon expansion of the bellows and, according to the invention, such a device is characterised in that the resilient means is another bellows the operation of which is dependent on the fluid temperature upstream of the throat.

The invention will now be described with reference to the accompanying drawings, in which:-

Fig. 1 is a schematic diagram of a refrigeration circuit which includes a conventional control device; Fig. 2 is a cross-sectional view of the conventional control device of Fig. 1;

Fig. 3 is a cross-sectional view of a first example of a control device in accordance with the invention; and,

Fig. 4 is a cross-sectional view of a second example of a control device in accordance with the invention.

Referring to Fig. 3, a control device 7 comprises a tubular casing 71, a first dividing wall 72, a second dividing wall 73, a third dividing wall 74, a first valve element 75, a first bellows 76, a second valve element 77 and a second bellows 78. The first dividing wall 72, the second dividing wall 73 and the third dividing wall 74 are rigidly attached to the inner surface of the tubular casing 71 at spaced apart positions. The first dividing wall 72 has a plurality of holes 721. The second dividing wall 73 has a throat 731 and a seat portion 732 for the first valve element 75 is formed at one end of the throat 731. The third dividing wall 74 has a plurality of holes 741. The first bellows 76 are disposed between the first dividing wall 72 and the second dividing wall 73, with one end portion fixed to an end surface of the first dividing wall 72. The first valve element 75 is fixed on the other end portion of the first bellows 76 and seated on the seated portion 732 to control the opening and closing of the throat 731. The second bellows 78 are disposed between the second dividing wall 73 and the third dividing wall 74, with one end portion fixed to an end surface of the third dividing wall 74. The second valve element 77 is fixed on the other end portion of the second bellows 78 and extends through the throat 731 of the second dividing wall 73. The first bellows 76 is charged with the same refrigerant as in the refrigeration circuit or with fluid which has a characteristic of having a higher saturated vapour pressure than the refrigerant in the refrigerant circuit, and is maintained so as to be saturated. The interior of the second bellows 78 contains a vaccuum.

In operation, when there is insufficient refrigerant in the refrigerant circuit and the first bellows 76 extend towards the right, the first valve element 75 closes the opening 732 of the throat 731. At that time, the pressure of the refrigerant at the outlet side of the throat 731 is reduced greatly. Therefore, the second bellows 78, which contain a vaccuum, extend towards the left. Thus, the second valve element 77 pushes on the first valve element 75, which is connected to the first bellows 76, to open the opening 732 of the throat 731. Thus, the pressure of the refrigerant at the inlet side of the compressor 1 is prevented from abnormally reducing.

With reference to Fig. 4, if an orifice 742 is formed through the third dividing wall 74 instead of the holes 741, the wall acts as a fixed throttle valve and the capillary 4 in the refrigeration circuit of Figure 1 can be eliminated. Therefore, in this embodiment of the invention, the control device 7 should be directly connected to the evaporator 5.

## Claims

1. A control device (7) for a refrigeration circuit, the device comprising a tubular casing (71) having a passageway therethrough from upstream to downstream ends of the casing, a first dividing wall (72) across the passageway and having a plurality of holes (721) therethrough, a second dividing wall (73) across the passageway downstream of the first wall and having a throat (731) therethrough, and resilient means (76) located between the first (72) and second (73) dividing walls and having a first valve element (75) at one end for controlling refrigerant flow through the throat (731), a third dividing wall (74) across the passageway downstream of the second wall and having at least one hole (741,742) therethrough, and a bellows (78), which is located between the second (73) and third (74) dividing walls and the operation of which is dependent on the fluid pressure downstream of the throat, the bellows having a second valve element (77) at one end, the second valve element (77) extending along the throat (731) and being arranged to hold the first valve element (75) away from the throat upon expansion of the bellows (78); characterised in that the resilient means is another bellows (76) the operation of which is dependent on the fluid temperature upstream of the throat.

2. A control device (7) according to claim 1, wherein the hole (742) in the third dividing wall (74) is formed as an orifice (742).

3. A control device (7) according to claim 1 or claim 2, wherein the another bellows (76) contains saturated fluid.

4. A control device (7) according to any of the preceding claims, wherein the bellows (78) contains a vacuum.

5. A refrigeration circuit comprising a compressor (1), a condenser (2), a control device (7) according to any of the preceding claims, an evaporator (5) and an accumulator (6), all formed into a closed circuit containing a refrigerant, wherein the another bellows (76) contains the refrigerant or a saturated fluid having a higher saturated vapour pressure than the refrigerant.

## Revendications

1. Dispositif de régulation (7) pour un circuit frigorifique, ce dispositif comprenant un boîtier tubulaire (71) traversé par un passage allant de l'extrémité amont à l'extrémité aval de ce boîtier, une première cloison de séparation (72) placée en travers du passage et percée d'un certain nombre de trous (721), une seconde cloison de séparation (73) placée en travers du passage en aval de la première cloison et comportant une gorge (731) à travers celle-ci, et des moyens élastiques (76) placés entre la première cloison de séparation (72) et la seconde cloison de séparation (73) et comportant un premier élément de soupape (75) à l'une de leurs extrémités pour contrôler le débit de réfrigérant à travers la gorge (731), une troisième cloison de séparation (74) placée en travers du passage en aval de la seconde paroi et percée d'au moins un trou (741, 742), et un soufflet (78) placé entre la seconde cloison de séparation (73) et la troisième cloison de séparation (74), le fonctionnement de ce soufflet dépendant de la pression du fluide en aval de la gorge, ce soufflet comportant un second élément de soupape (77) à l'une de ses extrémités, le second élément de soupape (77) s'étendant le long de la gorge (731) et se trouvant disposé de manière à maintenir le premier élément de soupape (75) écarté de la gorge lorsque le soufflet (78) de dilate, dispositif de régulation caractérisé en ce que les moyens élastiques sont constitués par un autre soufflet (76) dont le fonctionnement dépend de la température du fluide en amont de la gorge.

2. Dispositif de régulation (7) selon la revendication 1, caractérisé en ce que le trou (742) de la troisième cloison de séparation (74) est réalisé sous la forme d'un orifice (742).

3. Dispositif de régulation (7) selon l'une quelconque des revendications 1 et 2, caractérisé en ce que l'autre soufflet (76) contient un fluide saturé.

4. Dispositif de régulation (7) selon l'une quelconque des revendications précédentes, caractérisé en ce qu'on fait le vide dans le soufflet (78).

5. Circuit frigorifique comprenant un compresseur (1), un condenseur (2), un dispositif de régulation (7) selon l'une quelconque des revendications précédentes, un évaporateur (5) et un accumulateur (6), tous ces éléments étant réalisés sous la forme d'un circuit fermé contenant un réfrigérant, circuit frigorifique caractérisé en ce que l'autre soufflet (76) contient le réfrigérant ou un fluide saturé présentant une pression de vapeur saturante plus élevée que celle du réfrigérant.

## Ansprüche

1. Steuereinrichtung (7) für einen Kühlkreislauf, mit einem röhrenförmigen Gehäuse (71) mit einem Durchgang dadurch von einem stromaufwärtigen Ende zu einem stromabwärtigen Ende des Gehäuses, einer ersten unterteilenden Wand (72) quer durch den Durchgang mit einer Mehrzahl von Löchern (721) dadurch, einer zweiten unterteilenden Wand (73) quer durch den Durchgang stromaufwärts von der ersten Wand mit einer Öffnung (731) dadurch und einer zwischen der ersten (72) und der zweiten (73) unterteilenden Wand angeordneten federnden Vorrichtung (76) mit einem ersten Ventilelement (75) an einem Ende zum Steuern von Kühlmittelfluß durch die Öffnung (731), einer dritten unterteilenden Wand (74) quer durch den Durchgang stromabwärts von der zweiten Wand und mit mindestens einem Loch (741, 742) dadurch, und einem Balgen (78), der zwischen der zweiten (73) und dritten (74) unterteilenden Wand angeordnet ist und dessen Tätigkeit von dem Fluiddruck stromabwärts von der Öffnung abhängt, wobei der Balgen ein zweites Ventilelement (77) aufweist, das zweite Ventilelement (77) sich entlang der Öffnung (731) erstreckt und so ausgebildet ist, daß es das erste Ventilelement (75) von der Öffnung auf die Ausdehnung des Balgens (78) hin fernhält; dadurch gekennzeichnet, daß die federnde Vorrichtung ein anderer Balgen (76) ist, dessen Tätigkeit von der Fluidtemperatur stromaufwärts von der Öffnung abhängt.

2. Steuereinrichtung (7) nach Anspruch 1, bei dem das Loch (742) in der dritten unterteilenden Wand (74) als eine Mündung (742) gebildet ist.

3. Steuereinrichtung (7) nach Anspruch 1 oder 2, bei dem der andere Balgen (76) gesättigtes Fluid enthält.

4. Steuereinrichtung (7) nach einem der vorhergehenden Ansprüche, bei dem der Balgen (78) ein Vakuum enthält.

5. Kühlkreislauf mit einem Kompressor (1), einem Kondensator (2), einer Steuereinrichtung (7) nach einem der vorhergehenden Ansprüche, einem Verdampfer (5) und einem Akkumulator (6), die alle in einem ein Kühlmittel enthaltenden geschlossenen Kreislauf gebildet sind, bei dem der andere Balgen (76) das Kühlmittel oder ein gesättigtes Fluid mit einem höheren Sättigungsdampfdruck als das Kühlmittel enthält.

Fig. 1

Fig. 2

Fig. 3

Fig. 4